# EUROPEAN PATENT APPLICATION

(11) **EP 4 769 795 A1**
(43) Date of publication of application: **01.07.2026**
(21) Application number: 23955255.7
(22) Date of filing: 31.10.2023
(51) Int. Cl.: H01M 50/503, H01M 50/516

(54) **BATTERY CELL, BATTERY, AND ELECTRICAL APPARATUS**

(30) Priority: 13.10.2023 CN 202322749418 U
(71) Applicant: Contemporary Amperex Technology Co., Limited, Ningde, Fujian 352100 (CN)
(72) Inventor: SU, Huasheng, Ningde, Fujian 352100 (CN); LI, Can, Ningde, Fujian 352100 (CN); YANG, Rui, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Gong, Jinping
(86) International application number: PCT/CN2023/128856
(87) International publication number: WO 2025/076885

(57) **Abstract**

The present application is applicable to the technical field of power batteries, and provides a battery cell, a battery, and a power consuming apparatus. The battery cell (100) includes: an adapter (10), where a welding point (20) is formed on the adapter in a protruding manner; and a covering member (30), connected to the adapter and covering the welding point, where an accommodating cavity (40) used to accommodate the welding point is formed between the covering member and the adapter, and at least a portion of the welding point is accommodated in the accommodating cavity. In the battery cell provided in the present application, the accommodating cavity is provided between the covering member and the adapter, and at least a portion of the welding point is accommodated in the accommodating cavity. Accommodating the welding point in the accommodating cavity enables better contact between the covering member and the adapter around the welding point, and reduces the occurrence of suspension of the covering member. Accordingly, a negative impact of the welding point on the covering member is reduced, so that the covering member can be better adhered to the adapter, alleviating the problem of loosening or detaching of the covering member.

## Description

The present application claims priority to Chinese Patent Application 202322749418.X, filed with the China National Intellectual Property Administration on October 13, 2023 and entitled "BATTERY CELL, BATTERY, AND POWER CONSUMING APPARATUS", which is incorporated herein by reference in its entirety.

### TECHNICAL FIELD

The present application relates to the technical field of power batteries, and in particular, to a battery cell, a battery, and a power consuming apparatus.

### BACKGROUND

Energy saving and emission reduction are crucial to the sustainable development of automobile industry. Electric vehicles have become an important constituent part of the sustainable development of automobile industry by virtue of their advantages of energy saving and environmental protection. The battery technology is an important factor related to the development of the electric vehicles.

In the structure of a battery, an electrode terminal is usually welded to an adapter and electrically connected to an electrode assembly via the adapter. Welding the electrode terminal to the adapter forms a welding point on the adapter. In order to reduce falling of welding slag of the welding point into the electrode assembly which imposes a negative impact on the electrode assembly, an adhesive tape is usually provided on the adapter to cover the welding point. However, the current adhesive tape is prone to loosening or even detaching at the welding point, causing failure of the adhesive tape, thereby affecting the safety performance and stability of the battery.

### SUMMARY

The present application provides a battery cell, a battery, and a power consuming apparatus, which can alleviate the problem that an adhesive tape is prone to loosening or detaching.

According to a first aspect, some embodiments of the present application provide a battery cell, including:
an adapter, where a welding point is formed on the adapter in a protruding manner; and
a covering member, connected to the adapter and covering the welding point, where an accommodating cavity used to accommodate the welding point is formed between the covering member and the adapter, and at least a portion of the welding point is accommodated in the accommodating cavity.

In the technical solution of the embodiments, the accommodating cavity is provided between the covering member and the adapter, and at least a portion of the welding point is accommodated in the accommodating cavity. Accommodating the welding point in the accommodating cavity enables better contact between the covering member and the adapter around the welding point, and reduces occurrence of suspension of the covering member. Accordingly, a negative impact of the welding point on the covering member is reduced, so that the covering member can be better adhered to the adapter, thereby alleviating the problem of loosening or detaching of the covering member. In addition, welding slag of the welding point can also be accommodated in the accommodating cavity, reducing welding slag between the covering member and the adapter, thereby further enhancing adhesion between the covering member and the adapter, which better alleviates the problem of loosening or detaching of the covering member.

In some embodiments, the adapter is recessed and provided with a first recess, and a space formed by the first recess is at least a portion of the accommodating cavity; and
at least a portion of the welding point is accommodated in the first recess.

In the technical solution of the embodiments, the adapter is provided with the first recess, and at least a portion of the welding point is accommodated in the first recess, so as to reduce a height of the welding point protruding from the adapter. Accordingly, the occurrence of suspension of the covering member around the welding point can be reduced, increasing a contact area between the covering member and the adapter, thereby enhancing the adhesion between the covering member and the adapter, which alleviates the problem of loosening or detaching of the covering member.

In some embodiments, a dimension of the first recess in a thickness direction of the adapter ranges from 0.05 mm to 1 mm.

The technical solution of the embodiments provides some ranges for the dimension of the first recess in the thickness direction of the adapter, so that the first recess not only can accommodate at least a portion of the welding point to reduce a negative impact on the covering member, but also can reduce a negative impact of the adapter on an energy density of the battery cell.

In some embodiments, the covering member is recessed and provided with a second recess toward a direction away from the adapter, and a space formed by the second recess is at least a portion of the accommodating cavity; and
at least a portion of the welding point is accommodated in the second recess.

In the technical solution of the embodiments, the covering member is provided with the second recess, and at least a portion of the welding point is accommodated in the second recess, so that the covering member around the second recess can be better adhered to the adapter. Accordingly, the occurrence of suspension of the covering member around the welding point can be reduced, increasing the contact area between the covering member and the adapter, which alleviates the problem of loosening or detaching of the covering member.

In some embodiments, in the thickness direction of the adapter, a height of the welding point is less than or equal to a height of the accommodating cavity.

In the technical solution of the embodiments, the height of the welding point is less than or equal to the height of the accommodating cavity, so that the welding point can be better accommodated in the accommodating cavity in a height direction. Accordingly, the occurrence of suspension of the covering member around the welding point is further reduced, thereby further increasing the contact area between the covering member and the adapter around the welding point, which better alleviates the problem of loosening or detaching of the covering member.

In some embodiments, a dimension of the accommodating cavity in the thickness direction of the adapter ranges from 0.05 mm to 1 mm.

The technical solution of the embodiments provides some dimensions of the accommodating cavity in the thickness direction of the adapter, so that the accommodating cavity not only can accommodate the welding point to reduce the negative impact of the welding point on adhesion performance of the covering member, but also can reduce a negative impact on the energy density of the battery cell.

In some embodiments, in the thickness direction of the adapter, a projection of the accommodating cavity on the adapter at least covers a projection of the welding point on the adapter.

In the technical solution of the embodiments, the projection of the accommodating cavity on the adapter can cover the projection of the welding point on the adapter, so that more welding points can be accommodated in the accommodating cavity. Accordingly, the occurrence of suspension of the covering member around the welding point is further reduced, thereby further increasing the contact area between the covering member and the adapter around the welding point, which better alleviates the problem of loosening or detaching of the covering member.

In some embodiments, the accommodating cavity is a sealed space, and the welding point is accommodated in the accommodating cavity.

In the technical solution of the embodiments, the accommodating cavity is a closed space, so that the occurrence of the welding point falling into an electrode assembly can be further reduced, better improving safety performance and stability of a battery.

In some embodiments, the battery cell further includes a shell and an electrode terminal connected to the shell, and the adapter is welded to the electrode terminal with the welding point formed on a side facing away from the electrode terminal. The covering member covers at least the welding point.

In the technical solution of the embodiments, the covering member covers at least the welding point, so as to reduce the occurrence of the welding point falling into the electrode assembly, improving the safety performance and stability of the battery.

In some embodiments, the covering member is also connected to the shell, and the covering member covers at least a portion of a surface of the shell that faces the covering member.

In the technical solution of the embodiments, the covering member is also connected to the shell, so as to increase an adhesion area of the covering member, thereby reducing the occurrence of detaching of the covering member.

In some embodiments, the battery cell further includes an electrode assembly accommodated in the shell; and

the electrode assembly and the electrode terminal are connected to the adapter in different directions respectively; or the electrode assembly and the electrode terminal are connected to opposite sides of the adapter in a same direction respectively.

The technical solution of the embodiments provides some varying positional relationships between the electrode assembly, the electrode terminal, and the adapter, so that a structure of the adapter, the covering member, and the accommodating cavity can be adapted to battery cells of different structures, thereby improving compatibility of the structure.

In some embodiments, the adapter includes a first connection portion, a fuse portion, and a second connection portion that are sequentially connected, and the welding point is provided on the first connection portion.

The covering member covers the fuse portion, and a melting point of the covering member is higher than a melting point of the fuse portion.

The technical solution of the embodiments provides some specific structures of the adapter. The adapter includes the fuse portion, so that the fuse portion can melt when a current exceeds a preset value, to play a protective role. The covering member covers the fuse portion, so that the occurrence of a liquid generated by melting of the fuse portion dripping into the electrode assembly can be reduced, thereby further improving safety performance of the battery cell.

According to a second aspect, some embodiments of the present application further provide a battery, including the battery cell provided in some embodiments of the first aspect.

According to a third aspect, some embodiments of the present application further provide a power consuming apparatus, including the battery cell provided in some embodiments of the first aspect or the battery provided in some embodiments of the second aspect.

The foregoing description is merely a brief description of the technical solutions of the present application. To enable clearer understanding of the technical means of the present application, implementation may be performed according to content of the specification. In addition, to make the foregoing and other objectives, features, and advantages of the present application more evident and understandable, specific implementations of the present application are listed below.

### BRIEF DESCRIPTION OF THE DRAWINGS

In order to more clearly describe the technical solutions in embodiments of the present application, the following briefly describes the accompanying drawings required for describing the embodiments or the prior art. Evidently, the accompanying drawings in the following description are merely some embodiments of the present application. Those of ordinary skill in the art can still derive other drawings from these accompanying drawings without creative efforts.
FIG. 1 is a schematic diagram of a power consuming apparatus according to some embodiments of the present application;
FIG. 2 is a schematic structural exploded view of a battery according to some embodiments of the present application;
FIG. 3 is a schematic structural exploded view of a battery cell according to some embodiments of the present application;
FIG. 4 is a schematic structural exploded view of the battery cell according to some other embodiments of the present application;
FIG. 5 is a schematic structural exploded view of an end cover and a related structure thereof in the battery cell according to some embodiments of the present application;
FIG. 6 is a schematic structural exploded view of the end cover and the related structure thereof in the battery cell according to some other embodiments of the present application;
FIG. 7 is a schematic top view of the end cover in the battery cell according to some embodiments of the present application;
FIG. 8 is a schematic sectional view at A-A in FIG. 7;
FIG. 9 is a schematic partially enlarged view at B in FIG. 8 according to some embodiments of the present application;
FIG. 10 is a schematic partially enlarged view at B in FIG. 8 according to some other embodiments of the present application; and
FIG. 11 is a schematic three-dimensional view of an adapter according to some embodiments of the present application.

### List of reference numerals:

100 - battery cell;
10 - adapter; 11 - first recess; 12 - first connection portion; 13 - fuse portion; 14 - second connection portion;
20 - welding point;
30 - covering member; 31 - second recess;
40 - accommodating cavity;
50 - shell; 51 - case; 52 - end cover;
60 - electrode terminal;
70 - electrode assembly;
200 - battery;
80 - box body; 81 - first portion; 82 - second portion;
300 - power consuming apparatus;
91 - controller; 92 - motor.

### DETAILED DESCRIPTION

Embodiments of the technical solutions of the present application will be described in detail below with reference to the accompanying drawings. The following embodiments are used only to describe the technical solutions of the present application more clearly, and therefore are merely used as examples, rather than as limitations on the protection scope of the present application.

Unless otherwise defined, all technical and scientific terms used herein have the same meanings as those commonly understood by a person skilled in the technical field to which the present application relates. The terms used herein are used only to describe particular embodiments but are not intended to limit the present application. The terms "comprising", "including", and "having" and any variations thereof in the specification, claims, and the foregoing brief description of the drawings of the present application are intended to cover non-exclusive inclusion.

In the description of the embodiments of the present application, the technical terms "first", "second", and the like are used only for distinguishing between different objects, but cannot be construed as indicating or implying relative importance or implicitly indicating the number, specific order, or primary-secondary relationship of indicated technical features. In the description of the embodiments of the present application, "a plurality of" means two or more unless otherwise specifically defined.

Reference to "embodiment" herein means that a particular feature, structure, or characteristic described with reference to the embodiment can be included in at least one embodiment of the present application. The phrase in various places in the specification may not always refer to the same embodiment, or a separate or alternative embodiment mutually exclusive of other embodiments. It is explicitly and implicitly understood by a person skilled in the art that the embodiments described herein can be combined with other embodiments.

In the description of the embodiments of the present application, the term "and/or" merely describes an association between associated objects, indicating that three relationships may exist. For example, A and/or B may indicate three cases: A alone, both A and B, and B alone. In addition, the character "/" herein generally indicates that associated objects are in an "or" relationship.

In the description of the embodiments of the present application, the term "a plurality of" means at least two (including two). Similarly, "a plurality of groups" means at least two groups (including two groups), and "a plurality of pieces" means at least two pieces (including two pieces).

In the description of the embodiments of the present application, an orientation or a positional relationship indicated by the technical terms "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", "circumferential", and the like is based on an orientation or a positional relationship shown in the accompanying drawings, and is intended only for facilitating the description of the embodiments of the present application and simplification of the description, rather than indicating or implying that an indicated apparatus or element necessarily has a specific orientation or is constructed and operated in a specific orientation. Therefore, they cannot be construed as limitations on the embodiments of the present application.

In the description of the embodiments of the present application, unless otherwise explicitly specified and defined, the technical terms "mounted", "connected", "connect", "fixed", and the like should be understood in a broad sense, which, for example, may indicate a fixed connection, a detachable connection, or an integral connection; a mechanical connection or an electrical connection; a direct connection, an indirect connection via an intermediate medium, internal communication between two elements, or an interaction between two elements. A person of ordinary skill in the art may understand the specific meanings of the foregoing terms in the embodiments of the present application according to specific situations.

Currently, in terms of the development of the market, power batteries are used in an increasingly wide range. The power batteries are used not only in energy storage power systems such as hydroelectric power plants, thermal power plants, wind power plants, and solar power plants, but also widely used in electric transportation means such as electric bicycles, electric motorcycles, and electric vehicles and in many fields such as military equipment and aerospace. With the continuous expansion of the application field of power batteries, the market demand for the power batteries is also expanding.

In a structure of a battery, both an electrode terminal and a tab of an electrode assembly are usually connected to an adapter, so as to implement an electrical connection between the electrode terminal and the electrode assembly by means of connections with the adapter. The electrode terminal is usually connected to the adapter by means of welding. In addition to the capability of connecting the electrode terminal to the adapter, the welding point formed by welding also has a capability of flowing a current, so that a current can be better conducted to the electrode terminal via the adapter. However, welding slag of the welding point formed by welding is prone to falling into the battery, and the falling welding slag easily causes the occurrence of short circuit, or the like, resulting in a potential safety hazard to the battery.

To improve safety performance of the battery, currently, the falling of welding slag into the battery is reduced by providing an adhesive tape at the welding point in most cases. Specifically, the adhesive tape is adhered on an inner surface of a battery shell where the welding point is located, and the adhesive tape covers the welding point, so as to prevent the welding slag from falling using the adhesive tape.

However, since the welding point is a structure protruding from the adapter, the adhesive tape cannot be smoothly adhered on the adapter. When the adhesive tape covers the welding point, the adhesive tape is prone to suspension around the welding point, resulting in poor adhesion of the adhesive tape around the welding point. Accordingly, the adhesive tape is prone to loosening at the welding point, and detaching of the adhesive tape may even occur, thereby affecting the safety performance and stability of the battery.

In addition, due to existence of the welding slag, the welding slag is easy to adhere on the adhesive tape around the welding point, thereby reducing the adhesion between the adhesive tape and the adapter, which also easily causes loosening or detaching of the covering member.

In view of above, to alleviate the problem that the adhesive tape is prone to detaching, the present application provides some structures, in which an accommodating cavity used to accommodate the welding point is provided between the adapter and the adhesive tape, so that at least a portion of the welding point can be accommodated in the accommodating cavity. The accommodating cavity may be formed by providing an accommodating space on the adapter, may be formed by providing an accommodating space on the adhesive tape, or may be formed by providing accommodating spaces on both the adapter and the adhesive tape and then joining the accommodating spaces to form the accommodating cavity.

In such a battery cell, the welding point accommodated in the accommodating cavity has a reduced impact on the adhesive tape. For example, when the accommodating cavity includes an accommodating space provided on the adapter, accommodating the welding point in the accommodating cavity reduces a height of the welding point protruding from the adapter, alleviating suspension of the adhesive tape at the welding point, thereby increasing an adhesion area between the adhesive tape and the adapter. For another example, when the accommodating cavity includes an accommodating space provided on the adhesive tape, the welding point can directly enter the accommodating space in a process of adhering the adhesive tape to the adapter, reducing an impact of the height of the welding point protruding from the adapter on the adhesive tape, alleviating the suspension of the adhesive tape at the welding point, and thereby increasing the adhesion area between the adhesive tape and the adapter.

In addition, the welding slag of the welding point can also be retained in the accommodating cavity, so as to reduce the occurrence of the welding slag being adhered on the adhesive tape, thereby reducing a negative impact of the welding slag on the adhesion of the adhesive tape.

The battery cell disclosed in the embodiments of the present application can be used in a power consuming apparatus that uses a battery as a power source or in various energy storage systems that use batteries as energy storage elements. The power consuming apparatus may be, but is not limited to, a mobile phone, a tablet computer, a notebook computer, an electric toy, an electric tool, an electric motorcycle, an electric automobile, a ship, a spacecraft, or the like. The electric toy may include a stationary or mobile electric toy, such as a game machine, an electric car toy, an electric ship toy, and an electric airplane toy. The spacecraft may include an airplane, a rocket, a space shuttle, a spaceship, or the like.

For ease of description, the following embodiments are described with an example in which a power consuming apparatus 300 in an embodiment of the present application is a vehicle.

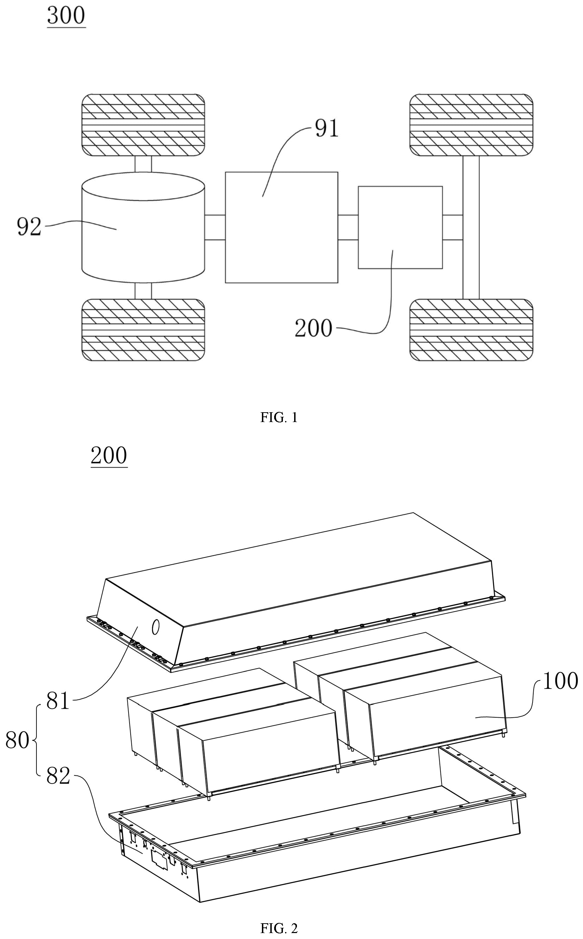

With reference to FIG. 1, FIG. 1 is a structural schematic diagram in the case where the power consuming apparatus 300 is a vehicle according to some embodiments of the present application. The vehicle may be a fuel vehicle, a gas vehicle, or a new energy vehicle, where the new energy vehicle may be a pure electric vehicle, a hybrid electric vehicle, or an extended-range electric vehicle. A battery 200 is provided inside the vehicle, and the battery 200 can be provided at the bottom, head, or tail of the vehicle. The battery 200 can be used to supply power to the vehicle. For example, the battery 200 can be used as a power supply for operating the vehicle. The vehicle may further include a controller 91 and a motor 92. The controller 91 is used to control the battery 200 to supply power to the motor 92, for example, for working power demands of the vehicle during start, navigation, and travel.

In some embodiments of the present application, the battery 200 not only can be used as a power source for operating the vehicle, but also can be used as a power source for driving the vehicle, to provide driving power for the vehicle as a replacement of or as a partial replacement of fuel or natural gas.

With reference to FIG. 2, FIG. 2 is an exploded view of the battery 200 according to some embodiments of the present application. The battery 200 includes a box body 80 and a battery cell 100, where the battery cell 100 is accommodated in the box body 80. The box body 80 is used to provide an accommodating space for the battery cell 100, and the box body 80 may be of various structures. In some embodiments, the box body 80 may include a first portion 81 and a second portion 82, where the first portion 81 and the second portion 82 cover each other, and the first portion 81 and the second portion 82 jointly define the accommodating space for accommodating the battery cell 100. The second portion 82 may be a hollow structure with an opening on one end, and the first portion 81 may be a plate-shaped structure, where the first portion 81 covers an opening side of the second portion 82, so that the first portion 81 and the second portion 82 jointly define the accommodating space. Alternatively, each of the first portion 81 and the second portion 82 may be a hollow structure with an opening on one side, where an opening side of the first portion 81 covers an opening side of the second portion 82. Certainly, the box body 80 formed by the first portion 81 and the second portion 82 may be of various shapes, such as a cylinder or a cuboid.

In the battery 200, there may be a plurality of battery cells 100, and the plurality of battery cells 100 may be connected in series, in parallel, or in series-parallel. The series-parallel connection means that the plurality of battery cells 100 are connected both in series and in parallel. The plurality of battery cells 100 may be directly connected together in series, in parallel, or in series-parallel, and then the whole of the plurality of battery cells 100 is accommodated in the box body 80. Certainly, in the battery 200, alternatively, a plurality of battery cells 100 may first be connected in series, in parallel, or in series-parallel to form a battery module, then a plurality of battery modules are connected in series, in parallel, or in series-parallel, and the whole of the battery modules is accommodated in the box body 80. The battery 200 may further include other structures. For example, the battery 200 may further include a bus-bar component used to implement electrical connections between the plurality of battery cells 100.

Each battery cell 100 may be a secondary battery or a primary battery, or may be a lithium-sulfur battery, a sodium-ion battery, or a magnesium-ion battery, but is not limited thereto. The battery cell 100 may be in the shape of a cylinder, a flat body, a cuboid, or another shape.

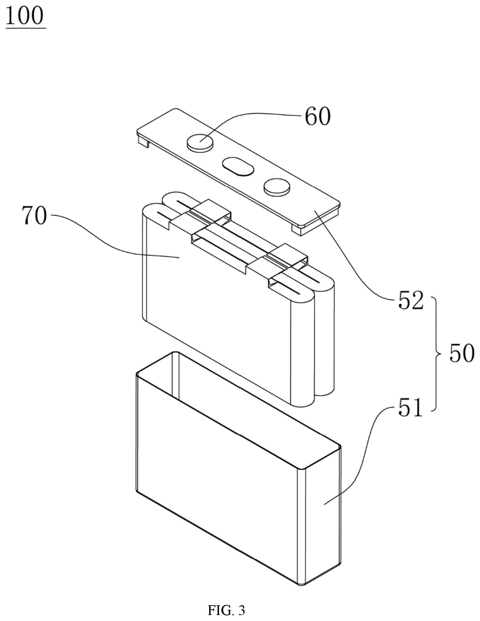

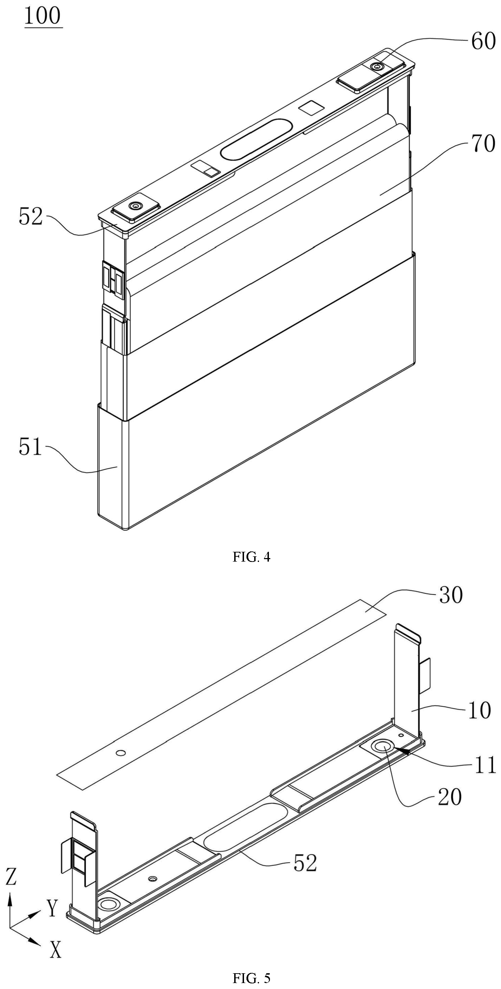

With reference to FIG. 3 and FIG. 4, FIG. 3 and FIG. 4 are schematic structural exploded views of the battery cell 100 according to some different embodiments of the present application. The battery cell 100 refers to a minimum unit constituting the battery 200. As shown in the figure, the battery cell 100 includes a shell 50, an electrode assembly 70, and another functional component. The shell 50 may include an end cover 52 and a case 51.

The end cover 52 refers to a component covering an opening of the case 51 to isolate an internal environment in the battery cell 100 from an external environment. Without limitation, the shape of the end cover 52 may be adapted to the shape of the case 51 to fit the case 51. Optionally, the end cover 52 may be made of a material (for example, aluminum alloy) with hardness and strength. In this way, the end cover 52 is not prone to deformation when squeezed or impacted, so that the battery cell 100 can achieve higher structural strength and improved safety performance. A functional component such as an electrode terminal 60 may be provided on the end cover 52. The electrode terminal 60 may be used for an electrical connection with the electrode assembly 70 to output or input electric energy of the battery cell 100. In some embodiments, a pressure relief mechanism used to relieve internal pressure when the internal pressure or temperature in the battery cell 100 reaches a threshold may also be provided on the end cover 52. The end cover 52 may also be of various materials, such as copper, iron, aluminum, stainless steel, aluminum alloy, and plastic, which are not particularly limited in the embodiments of the present application. In some embodiments, an insulator may also be provided on an inner side of the end cover 52. The insulator may be used to isolate an electrical connection component in the case 51 from the end cover 52, so as to reduce a risk of short circuit. For example, the insulator may be plastic, rubber, or the like.

The case 51 is an assembly used to fit the end cover 52 to form the internal environment in the battery cell 100, where the formed internal environment may be used to accommodate the electrode assembly 70, an electrolyte, and another component. The case 51 and the end cover 52 may be independent components. The case 51 may be provided with an opening, and at the opening, the end cover 52 covers the opening to form the internal environment in the battery cell 100. Without limitation, the end cover 52 and the case 51 may alternatively be integrated with each other. Specifically, the end cover 52 and the case 51 may first form a shared connection surface before other components are placed into the case, and then the end cover 52 covers the case 51 when interior of the case 51 is to be packaged. The case 51 may be of various shapes and various sizes, for example, a cuboid shape, a cylinder shape, a hexagonal prism shape, or the like. Specifically, the shape of the case 51 may be determined according to a specific shape and size of the electrode assembly 70. The case 51 may be of various materials, such as copper, iron, aluminum, stainless steel, aluminum alloy, and plastic, which are not particularly limited in the embodiments of the present application.

The electrode assembly 70 is a component in the battery cell 100 where an electrochemical reaction occurs. The case 51 may encompass one or more electrode assemblies 70. The electrode assembly 70 is mainly formed by winding or stacking a positive electrode plate and a negative electrode plate, and a separator is usually provided between the positive electrode plate and the negative electrode plate. Portions of the positive electrode plate and the negative electrode plate with active substances form a body portion of the electrode assembly 70, and portions of the positive electrode plate and the negative electrode plate with no active substances form tabs respectively. A positive electrode tab and a negative electrode tab may be both located on one end of the body portion or located on two ends of the body portion respectively. During charge-discharge of the battery 200, a positive electrode active substance and a negative electrode active substance react with the electrolyte, and the tabs are connected to the electrode terminal 60 to form a current circuit.

The electrode assembly 70 may be placed in various directions. With reference to FIG. 3, the electrode assembly 70 may be vertically placed with the tab directly facing the electrode terminal 60. With reference to FIG. 4, the electrode assembly 70 may alternatively be transversely placed, in which case the tab and the electrode terminal 60 are located on different sides of the electrode plate respectively.

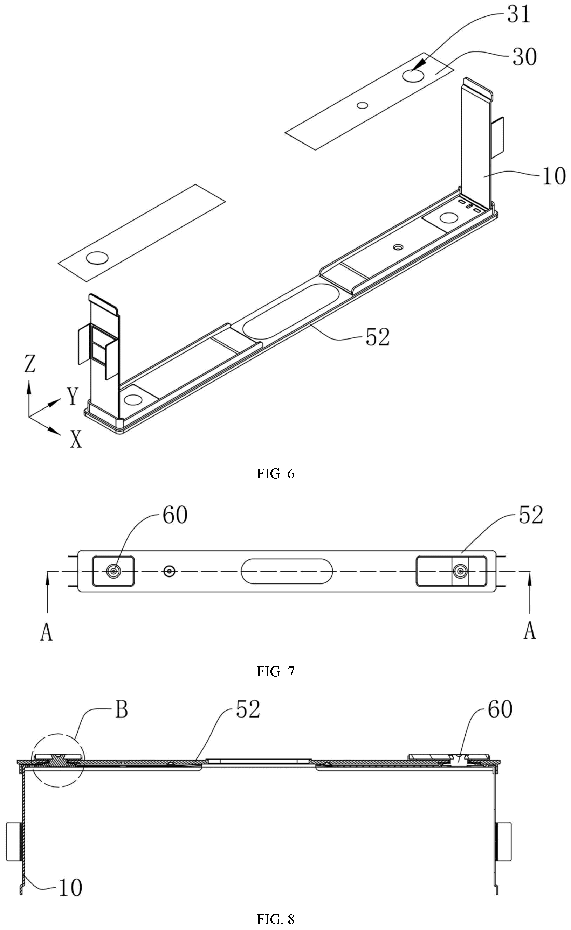

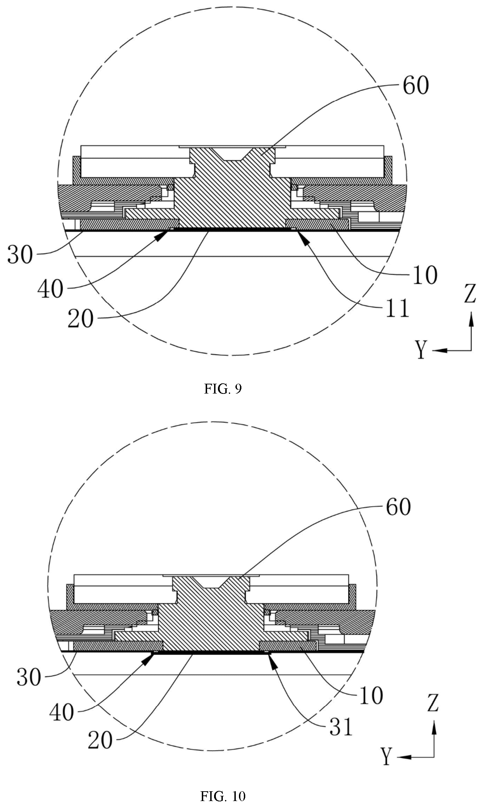

According to a first aspect, some embodiments of the present application provide a battery cell 100. With reference to FIG. 3 to FIG. 10, FIG. 3 is a schematic exploded view of the battery cell 100 according to some embodiments of the present application; FIG. 4 is a schematic exploded view of the battery cell 100 according to some other embodiments of the present application; FIG. 5 is a schematic exploded view of an adapter 10, a covering member 30, an accommodating cavity 40, and related structures thereof according to some embodiments of the present application; FIG. 6 is a schematic exploded view of the adapter 10, the covering member 30, the accommodating cavity 40, and the related structures thereof according to some other embodiments of the present application; FIG. 7 is a schematic top view of an end cover 52 in the battery cell 100 according to some embodiments of the present application; FIG. 8 is a schematic sectional view at A-A in FIG. 7; FIG. 9 is a schematic partially enlarged view at B in FIG. 8 according to some embodiments of the present application; and FIG. 10 is a schematic partially enlarged view at B in FIG. 8 according to some other embodiments of the present application.

In FIG. 5, FIG. 6, FIG. 9, and FIG. 10, a direction of the X axis is a width direction of the end cover 52 and the battery cell 100; a direction of the Y axis is a length direction of the end cover 52 and the battery cell 100, where an electrode terminal 60 and the adapter 10 are usually arranged in the direction; and a direction of the Z axis is a height direction of the end cover 52 and the battery cell 100.

In some embodiments of the present application, the battery cell 100 includes the adapter 10 and the covering member 30, where a welding point 20 is formed on the adapter 10 in a protruding manner. The covering member 30 is connected to the adapter 10 and covers the welding point 20. An accommodating cavity 40 used to accommodate the welding point 20 is formed between the covering member 30 and the adapter 10, and at least a portion of the welding point 20 is accommodated in the accommodating cavity 40.

The adapter 10 refers to a member in the battery cell 100 that is used to connect and achieve conduction between the electrode terminal 60 and an electrode assembly 70. The adapter 10 may be of a plate shape, a rod shape, a block shape, or another shape. The adapter 10 may be of a straight line shape, an L shape, a U shape, or another shape. A material of the adapter 10 includes a material capable of electrical conduction, for example, which may include metal, alloy, or another material.

The welding point 20 refers to a structure formed after the adapter 10 is welded to the electrode terminal 60. Since the welding point 20 is a structure protruding from the adapter 10, a height of the welding point 20 refers to a dimension of the welding point 20 on the Z axis.

The covering member 30 refers to a structure connected to the adapter 10. The covering member 30 is used to cover the welding point 20, to reduce the occurrence of welding slag of the welding point 20 falling into the electrode assembly 70 or another structure. The covering member 30 may alternatively be an adhesive tape, or another structure that can be adhered to the adapter 10. The shape of the covering member 30 may be an elongated strip shape or another shape. The shape of the covering member 30 may alternatively be set according to the shape of the welding point 20.

The accommodating cavity 40 is formed between the covering member 30 and the adapter 10. The accommodating cavity 40 is used to accommodate the welding point 20. At least a portion of the welding point 20 is accommodated in the accommodating cavity 40. Since the accommodating cavity 40 is formed between the covering member 30 and the adapter 10, the welding point 20 accommodated in the accommodating cavity 40 can be covered by the covering member 30, to reduce the occurrence of the welding slag falling into the battery cell 100. Moreover, as the covering member 30 covers the welding point 20, the welding point 20 not accommodated in the accommodating cavity 40 can also be covered by the covering member 30, to reduce the occurrence of the welding slag falling into the battery cell 100.

The accommodating cavity 40 may include an accommodating space formed on the adapter 10, may include an accommodating space formed on the covering member 30, or may include both an accommodating space formed on the adapter 10 and an accommodating space formed on the covering member 30. In some embodiments, the accommodating cavity 40 includes an accommodating space provided on the adapter 10, and accommodating the welding point 20 in the accommodating cavity 40 reduces a height of the welding point 20 protruding from the adapter 10, alleviating suspension of the adhesive tape at the welding point 20, thereby increasing an adhesion area between the adhesive tape and the adapter 10. In some other embodiments, the accommodating cavity 40 includes an accommodating space provided on the adhesive tape, and the welding point 20 can directly enter the accommodating space in a process of adhering the adhesive tape to the adapter 10, reducing an impact of the height of the welding point 20 protruding from the adapter 10 on the adhesive tape, alleviating the suspension of the adhesive tape at the welding point 20, and thereby increasing the adhesion area between the adhesive tape and the adapter 10.

In most cases, the current covering member directly covers the welding point. Since the welding point is a structure protruding from the adapter, the covering member is prone to suspension around the welding point when covering the welding point. Specifically, when the covering member covers the welding point, the covering member, the welding point, and the adapter easily form a triangular or triangle-like space by enclosing, where the covering member is an oblique edge of the space. In this case, the covering member is suspended and cannot be adhered to the adapter, thereby reducing an adhesion area between the covering member and the adapter around the welding point. When the height of the welding point is larger, the adhesion area between the covering member and the adapter around the welding point is smaller, resulting in poorer adhesion of the covering member around the welding point, which makes the covering member more prone to detaching.

In view of above, in the embodiments, the accommodating cavity 40 is provided between the covering member 30 and the adapter 10, and at least a portion of the welding point 20 is accommodated in the accommodating cavity 40. Accommodating the welding point 20 in the accommodating cavity 40 enables better contact between the covering member 30 and the adapter 10 around the welding point 20, and reduces the occurrence of suspension of the covering member 30. Accordingly, a negative impact of the welding point 20 on the covering member 30 is reduced, so that the covering member 30 can be better adhered to the adapter 10, alleviating the problem of loosening or detaching of the covering member 30. In addition, welding slag of the welding point 20 can also be accommodated in the accommodating cavity 40, reducing welding slag between the covering member 30 and the adapter 10, thereby further enhancing adhesion between the covering member 30 and the adapter 10, which better alleviates the problem of loosening or detaching of the covering member 30.

According to some embodiments of the present application, with reference to FIG. 5, FIG. 7, FIG. 8, and FIG. 9, FIG. 5 is a schematic exploded view of the adapter 10, the covering member 30, the accommodating cavity 40, and the related structures thereof according to some embodiments of the present application; FIG. 7 is a schematic top view of the end cover 52 in the battery cell 100 according to some embodiments of the present application; FIG. 8 is a schematic sectional view at A-A in FIG. 7; and FIG. 9 is a schematic partially enlarged view at B in FIG. 8 according to some embodiments of the present application.

In some embodiments of the present application, the adapter 10 is recessed and provided with a first recess 11, and a space formed by the first recess 11 is at least a portion of the accommodating cavity 40. At least a portion of the welding point 20 is accommodated in the first recess 11.

The first recess 11 refers to a structure provided on the adapter 10 by recessing. When the adapter 10 is connected to the electrode terminal 60, the first recess 11 is provided on a side of the adapter 10 that faces away from the electrode terminal 60, and the first recess 11 is provided by recessing toward a direction where the electrode terminal 60 is located. The first recess 11 may be a circular recess, a square recess, or a recess of another shape. Since the first recess 11 has a function of accommodating the welding point 20, the shape of the first recess 11 may alternatively be set according to the shape of the welding point 20.

The space formed by the first recess 11 is at least a portion of the accommodating cavity 40. Specifically, the space formed by the first recess 11 may be the entire space of the accommodating cavity 40, in which case a side wall and a bottom wall of the first recess 11 and the covering member 30 form the accommodating cavity 40 by enclosing. Alternatively, the space formed by the first recess 11 may be only a portion of the accommodating cavity 40, in which case another space also exists between the covering member 30 and the adapter 10 to accommodate the welding point 20.

The entire welding point 20 may be completely accommodated in the first recess 11, in which case the welding point 20 has a small negative impact on the adhesion between the covering member 30 and the adapter 10. Alternatively, only a portion of the welding point 20 may be accommodated in the first recess 11, while a portion of the welding point 20 that is not accommodated in the first recess 11 is arranged in another space of the accommodating cavity 40, in which case the welding point 20 also has a small negative impact on the adhesion between the covering member 30 and the adapter 10. Still alternatively, only a portion of the welding point 20 may be accommodated in the first recess 11, while a portion of the welding point 20 that is not accommodated in the first recess 11 is arranged between the covering member 30 and the adapter 10.

Accommodating at least a portion of the welding point 20 in the first recess 11 can reduce the height of a portion of the welding point 20 that protrudes from the adapter 10, thereby reducing an area of suspension of the covering member 30. The negative impact of the welding point 20 on the covering member 30 is reduced, so that the covering member 30 can be better adhered to the adapter 10, thereby alleviating the problem of loosening or detaching of the covering member 30.

In the embodiments, the adapter 10 is provided with the first recess 11, and at least a portion of the welding point 20 is accommodated in the first recess 11, so as to reduce the height of the welding point 20 protruding from the adapter 10. Accordingly, the occurrence of suspension of the covering member 30 around the welding point 20 can be reduced, increasing a contact area between the covering member 30 and the adapter 10, thereby enhancing the adhesion between the covering member 30 and the adapter 10, which alleviates the problem of loosening or detaching of the covering member 30.

In some embodiments, the welding point 20 may be completely accommodated in the first recess 11. In this case, a surface of the adapter 10 opposite the covering member 30 is free from the impact of the welding point 20 and becomes a flat surface with no bump. In this case, the covering member 30 can be better adhered to the adapter 10.

With reference to FIG. 5 and FIG. 9, in some embodiments, a dimension of the first recess 11 in a thickness direction of the adapter 10 ranges from 0.05 millimeters (mm) to 1 mm.

The thickness direction of the adapter 10 is consistent with the height direction (Z) of the battery cell 100. That is, the thickness direction of the adapter 10 refers to the direction of the Z axis in the figure. The dimension of the first recess 11 in the thickness direction (Z) of the adapter 10 is a depth of the first recess 11. The dimension of the first recess 11 in the thickness direction of the adapter 10 may be specifically 0.05 mm, 0.1 mm, 0.2 mm, 0.3 mm, 0.5 mm, 0.7 mm, 1 mm, or another value.

The depth of the first recess 11 affects a height of the welding point 20 that can be accommodated in the first recess 11. The first recess 11 with a larger depth can accommodate more welding points 20 in the height direction (Z), and therefore can better reduce the negative impact of the welding point 20 on the adhesion of the covering member 30. Since the first recess 11 is provided on the adapter 10, the depth of the first recess 11 is affected by a thickness of the adapter 10. If the thickness of the adapter 10 is large, the depth of the first recess 11 can also be set to be large. However, the thickness of the adapter 10 has a negative impact on an energy density of the battery cell 100. In view of above, the embodiments provide some ranges for the dimension of the first recess 11 in the thickness direction (Z) of the adapter 10, so that the first recess 11 not only can accommodate at least a portion of the welding point 20 to reduce the negative impact on the covering member 30, but also can reduce the negative impact of the adapter 10 on the energy density of the battery cell 100.

According to some embodiments of the present application, with reference to FIG. 6, FIG. 7, FIG. 8, and FIG. 10, FIG. 6 is a schematic exploded view of the adapter 10, the covering member 30, the accommodating cavity 40, and the related structures thereof according to some other embodiments of the present application; FIG. 7 is a schematic top view of the end cover 52 in the battery cell 100 according to some embodiments of the present application; FIG. 8 is a schematic sectional view at A-A in FIG. 7; and FIG. 10 is a schematic partially enlarged view at B in FIG. 8 according to some embodiments of the present application.

In some embodiments of the present application, the covering member 30 is recessed and provided with a second recess 31 toward a direction away from the adapter 10, and a space formed by the second recess 31 is at least a portion of the accommodating cavity 40. At least a portion of the welding point 20 is accommodated in the second recess 31.

The second recess 31 refers to a structure provided on the covering member 30 by recessing. When the covering member 30 is adhered to the adapter 10, the second recess 31 is provided on a side of the covering member 30 that faces the adapter 10, and the second recess 31 is provided by recessing toward the direction away from the adapter 10. The second recess 31 may be a circular recess, a square recess, or a recess of another shape. Since the second recess 31 has a function of accommodating the welding point 20, the shape of the second recess 31 may alternatively be set according to the shape of the welding point 20.

A space formed by the second recess 31 is at least a portion of the accommodating cavity 40. In some embodiments, the space formed by the second recess 31 may be the entire space of the accommodating cavity 40, in which case a side wall and a bottom wall of the second recess 31 and the adapter 10 form the accommodating cavity 40 by enclosing. In some other embodiments, the second recess 31 may fit the first recess 11, in which case the space formed by the first recess 11 and the space formed by the second recess 31 jointly constitute the accommodating cavity 40. In still other embodiments, the space formed by the second recess 31 may alternatively be only a portion of the accommodating cavity 40, in which case another space also exists between the covering member 30 and the adapter 10 to accommodate the welding point 20.

The entire welding point 20 may be completely accommodated in the second recess 31, in which case the welding point 20 has a small negative impact on the adhesion between the covering member 30 and the adapter 10. Alternatively, only a portion of the welding point 20 may be accommodated in the second recess 31, while a portion of the welding point 20 that is not accommodated in the second recess 31 is arranged in another space of the accommodating cavity 40, in which case the welding point 20 also has a small negative impact on the adhesion between the covering member 30 and the adapter 10. Still alternatively, only a portion of the welding point 20 may be accommodated in the second recess 31, while a portion of the welding point 20 that is not accommodated in the second recess 31 is arranged between the covering member 30 and the adapter 10.

Accommodating at least a portion of the welding point 20 in the second recess 31 can reduce an impact of a portion of the welding point 20 that protrudes from the adapter 10 on the covering member 30. That is, the portion of the welding point 20 that protrudes from the adapter 10 can enter the second recess 31, thereby reducing a height of the covering member 30 at the welding point 20 that is raised by the welding point 20. Accordingly, an area of suspension of the covering member 30 is reduced, so that the covering member 30 can be better adhered to the adapter 10, thereby alleviating the problem of loosening or detaching of the covering member 30.

In the embodiments, the covering member 30 is provided with the second recess 31, and at least a portion of the welding point 20 is accommodated in the second recess 31, so that the covering member 30 around the second recess 31 can be better adhered to the adapter 10. Accordingly, the occurrence of suspension of the covering member 30 around the welding point 20 can be reduced, increasing the contact area between the covering member 30 and the adapter 10, which alleviates the problem of loosening or detaching of the covering member 30.

In some embodiments, the welding point 20 can be completely accommodated in the second recess 31. That is, when the covering member 30 is adhered to the adapter 10, the welding point 20 can completely enter the second recess 31. The welding point 20 does not raise the covering member 30 to cause suspension of the covering member 30, in which case the covering member 30 can be better adhered to the adapter 10.

According to some embodiments of the present application, with reference to FIG. 7, FIG. 8, FIG. 9, and FIG. 10, FIG. 6 is a schematic exploded view of the adapter 10, the covering member 30, the accommodating cavity 40, and the related structures thereof according to some other embodiments of the present application; FIG. 7 is a schematic top view of the end cover 52 in the battery cell 100 according to some embodiments of the present application; FIG. 8 is a schematic sectional view at A-A in FIG. 7; FIG. 9 is a schematic partially enlarged view at B in FIG. 8 according to some embodiments of the present application; and FIG. 10 is a schematic partially enlarged view at B in FIG. 8 according to some other embodiments of the present application.

In FIG. 9 and FIG. 10, the thickness direction of the adapter 10 is the direction of the Z axis in the figure, the height of the welding point 20 is the dimension of the welding point 20 in the direction of the Z axis in the figure, and a height of the accommodating cavity 40 is a dimension of the accommodating cavity 40 in the direction of the Z axis in the figure.

In some embodiments of the present application, in the thickness direction (Z) of the adapter 10, the height of the welding point 20 is less than or equal to the height of the accommodating cavity 40.

The height of the welding point 20 is less than or equal to the height of the accommodating cavity 40, so that the welding point 20 can be better accommodated in the accommodating cavity 40 in the height direction (Z). Accordingly, the adhesion area between the covering member 30 and the connector can be further increased, further reducing the negative impact of the welding point 20 on the covering member 30 in the height direction (Z), which alleviates the problem of loosening or detaching of the covering member 30.

In the embodiments, the height of the welding point 20 is less than or equal to the height of the accommodating cavity 40, so that the welding point 20 can be better accommodated in the accommodating cavity 40 in the height direction (Z). Accordingly, the occurrence of suspension of the covering member 30 around the welding point 20 is further reduced, thereby further increasing the contact area between the covering member 30 and the adapter 10 around the welding point 20, which better alleviates the problem of loosening or detaching of the covering member 30.

With reference to FIG. 9 and FIG. 10, in some embodiments, the dimension of the accommodating cavity 40 in the thickness direction of the adapter 10 ranges from 0.05 mm to 1 mm.

The thickness direction of the adapter 10 refers to the direction of the Z axis in the figure. The dimension of the accommodating cavity 40 in the thickness direction (Z) of the adapter 10 is the height of the accommodating cavity 40. The dimension of the accommodating cavity 40 in the thickness direction (Z) of the adapter 10 may be specifically 0.05 mm, 0.1 mm, 0.2 mm, 0.3 mm, 0.5 mm, 0.7 mm, 1 mm, or another value.

The height of the accommodating cavity 40 affects the height of the welding point 20 that can be accommodated in the accommodating cavity 40. The accommodating cavity 40 with a larger height can accommodate more welding points 20 in the height direction (Z), and therefore can better reduce the negative impact of the welding point 20 on the adhesion of the covering member 30. Moreover, since the accommodating cavity 40 is substantially formed within the battery cell 100, the height of the accommodating cavity 40 also has a negative impact on the energy density of the battery cell 100. In view of above, the embodiments provide some dimensions of the accommodating cavity 40 in the thickness direction (Z) of the adapter 10, so that the accommodating cavity 40 not only can accommodate the welding point 20 to reduce the negative impact of the welding point 20 on adhesion performance of the covering member 30, but also can reduce the negative impact on the energy density of the battery cell 100.

According to some embodiments of the present application, with reference to FIG. 5 and FIG. 6, FIG. 5 is a schematic exploded view of the adapter 10, the covering member 30, the accommodating cavity 40, and the related structures thereof according to some embodiments of the present application; and FIG. 6 is a schematic exploded view of the adapter 10, the covering member 30, the accommodating cavity 40, and the related structures thereof according to some other embodiments of the present application.

In some embodiments of the present application, in the thickness direction of the adapter 10, a projection of the accommodating cavity 40 on the adapter 10 at least covers a projection of the welding point 20 on the adapter 10.

The projection of the accommodating cavity 40 on the adapter 10 refers to a range that the accommodating cavity 40 can cover on a plane where the adapter 10 is located. The projection of the welding point 20 on the adapter 10 refers to a range that the welding point 20 can cover on the plane where the adapter 10 is located. The plane where the adapter 10 is located refers to a plane parallel to the X axis and the Y axis in the figure.

The projection of the accommodating cavity 40 on the adapter 10 can cover the projection of the welding point 20 on the adapter 10, so that the welding point 20 can be better accommodated in the accommodating cavity 40 in both the direction of the X axis and the direction of the Y axis, to further increase the adhesion area between the covering member 30 and the adapter 10, and reduce the negative impact on the adhesion of the covering member 30.

In the embodiments, the projection of the accommodating cavity 40 on the adapter 10 can cover the projection of the welding point 20 on the adapter 10, so that more welding points 20 can be accommodated in the accommodating cavity 40. Accordingly, the occurrence of suspension of the covering member 30 around the welding point 20 is further reduced, thereby further increasing the contact area between the covering member 30 and the adapter 10 around the welding point 20, which better alleviates the problem of loosening or detaching of the covering member 30.

In some embodiments, the dimension of the welding point 20 in the direction of the Z axis is less than or equal to the dimension of the accommodating cavity 40 in the direction of the Z axis, and the projection of the accommodating cavity 40 on the adapter 10 can cover the projection of the welding point 20 on the adapter 10. The welding point 20 can be completely accommodated in the accommodating cavity 40. In this case, the welding point 20 does not easily raise the covering member 30, and the welding point 20 does not easily appear between the covering member 30 and the adapter 10. Accordingly, the welding point 20 has a smaller negative impact on the covering member 30, and the covering member 30 can be better adhered to the adapter 10.

According to some embodiments of the present application, the accommodating cavity 40 is a sealed space, and the welding point 20 is accommodated in the accommodating cavity 40.

Since the accommodating cavity 40 has a function of accommodating the welding point 20 and reducing falling of the welding point 20 into the battery cell 100, the sealed space practically means that the accommodating cavity 40 is not easy to communicate with a space outside the accommodating cavity 40, and the welding slag in the accommodating cavity 40 is not easy to move out of the accommodating cavity 40.

In the embodiments, the accommodating cavity 40 is a closed space, so that the occurrence of the welding point 20 falling into the electrode assembly 70 can be further reduced, better improving the safety performance and stability of the battery 200.

In some embodiments, the covering member 30 is completely adhered to the adapter 10. That is, in this case, no suspension exists between the covering member 30 and the adapter 10, while only the accommodating cavity 40 exists.

Since the accommodating cavity 40 is formed between the covering member 30 and the adapter 10, the covering member 30 being completely adhered to the adapter 10 not only can make the accommodating cavity 40 a sealed space, but also can further increase the contact area between the covering member 30 and the adapter 10, thereby further enhancing the adhesion of the covering member 30 adhered to the adapter 10.

According to some embodiments of the present application, with reference to FIG. 3, FIG. 4, FIG. 5, and FIG. 6, FIG. 3 is a schematic exploded view of the battery cell 100 according to some embodiments of the present application; FIG. 4 is a schematic exploded view of the battery cell 100 according to some other embodiments of the present application; FIG. 5 is a schematic exploded view of the adapter 10, the covering member 30, the accommodating cavity 40, and the related structures thereof according to some embodiments of the present application; and FIG. 6 is a schematic exploded view of the adapter 10, the covering member 30, the accommodating cavity 40, and the related structures thereof according to some other embodiments of the present application.

The battery cell 100 further includes a shell 50 and the electrode terminal 60 connected to the shell 50. The adapter 10 is welded to the electrode terminal 60 with the welding point 20 formed on a side facing away from the electrode terminal 60. The covering member 30 covers at least the welding point 20.

The shell 50 refers to a structure that can accommodate the electrode terminal 60, the electrode assembly 70, or another functional component. The shell 50 can isolate an internal environment in the battery cell 100 from an external environment. The shell 50 may include the end cover 52, a case 51, or another structure.

The electrode terminal 60 refers to a structure in the battery cell 100 that is used to output or input electric energy. The electrode terminal 60 is electrically connected to the electrode assembly 70 via the adapter 10, to output or input electric energy of the battery cell 100. One end of the adapter 10 is connected to the electrode terminal 60, and the welding point 20 is formed on a side of the adapter 10 opposite the electrode terminal 60. The electrode terminal 60 may be provided on the end cover 52, or may be provided in another position on the shell 50.

The side of the adapter 10 opposite the electrode terminal 60 faces the interior of the shell 50. Therefore, the welding slag of the welding point 20 may fall into the shell 50. The covering member 30 covering the welding point 20 can reduce the occurrence of falling of the welding slag. The covering member 30 may cover only the welding point 20, or may cover another structure in addition to the welding point 20, for example, the adapter 10, the end cover 52, or another structure.

The embodiments provide another structure of the battery cell 100, in which the covering member 30 covers at least the welding point 20, so as to reduce the occurrence of the welding point 20 falling into the electrode assembly 70, improving the safety performance and stability of the battery 200.

With reference to FIG. 5 and FIG. 6, in some embodiments, the covering member 30 is also connected to the shell 50, and the covering member 30 covers at least a portion of a surface of the shell 50 that faces the covering member 30.

The covering member 30 is also connected to the shell 50. Such an arrangement enables the covering member 30 to be connected to both the adapter 10 and the end cover 52, thereby further increasing the adhesion area of the covering member 30, so that the covering member 30 is not prone to detaching. The arrangement can also assist in fixing the adapter 10 by means of the covering member 30.

The surface of the shell 50 that faces the covering member 30 refers to a surface of the shell 50 that faces the interior of the shell 50. The covering member 30 covers at least a portion of the surface of the shell 50 that face the covering member 30. That is, the covering member 30 may cover the corresponding entire surface of the shell 50 that faces the interior, or may cover only a portion of the surface of the shell 50 that faces the interior. For example, when the electrode terminal 60 is provided on the end cover 52, the covering member 30 may cover an entire surface of the end cover 52 that faces the interior of the shell 50, or may cover only a portion of the surface of the end cover 52 that faces the interior of the shell 50.

With reference to FIG. 5, in some embodiments, the covering member 30 is a continuous integral structure. In addition to the welding point 20, the covering member 30 may also cover the adapter 10, the end cover 52, or another structure, so that the covering member 30 not only can be used to cover the welding point 20 and reduce falling of welding slag, but also can reduce an impact of another corresponding structure on the end cover 52 on the interior of the battery cell 100.

With reference to FIG. 6, in some embodiments, the covering member 30 includes at least two discrete portions. According to the number the welding points 20, in addition to the welding point 20, each portion of the covering member 30 also covers the adapter 10 and a portion of the end cover 52 around the adapter 10. Such an arrangement enables the covering member 30 to be connected to both the adapter 10 and the end cover 52, thereby further increasing the adhesion area of the covering member 30, so that the covering member 30 is not prone to detaching. The arrangement can also assist in fixing the adapter 10 by means of the covering member 30.

With reference to FIG. 3 and FIG. 4, in some embodiments, the battery cell 100 further includes the electrode assembly 70 accommodated in the shell 50.

With reference to FIG. 3, the electrode assembly 70 and the electrode terminal 60 are connected to opposite sides of the adapter 10 in a same direction respectively. That is, the electrode assembly 70 and the electrode terminal 60 are connected to the opposite sides of the adapter 10 respectively. In this case, the adapter 10 may be a planar plate-shaped structure, and a connection portion between the electrode assembly 70 and the adapter 10 and a connection portion between the electrode terminal 60 and the adapter 10 are both located on a same side of the shell 50.

With reference to FIG. 4, the electrode assembly 70 and the electrode terminal 60 are connected to the adapter 10 in different directions respectively. That is, the connection portion between the electrode assembly 70 and the adapter 10 and the connection portion between the electrode terminal 60 and the adapter 10 are located on different sides of the shell 50 respectively. In this case, the adapter 10 may be an L-shaped structure.

The embodiments provide some varying positional relationships between the electrode assembly 70, the electrode terminal 60, and the adapter 10, so that a structure of the adapter 10, the covering member 30, and the accommodating cavity 40 can be adapted to battery cells 100 of different structures, thereby improving compatibility of the structure.

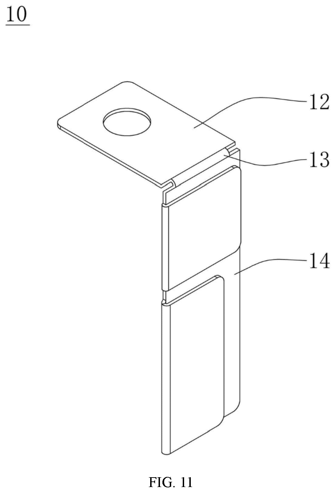

According to some embodiments of the present application, with reference to FIG. 11, FIG. 11 is a schematic three-dimensional view of the adapter 10 according to some embodiments of the present application.

In some embodiments of the present application, the adapter 10 includes a first connection portion 12, a fuse portion 13, and a second connection portion 14, and the welding point 20 is provided on the first connection portion 12. The covering member 30 covers the fuse portion 13, and a melting point of the covering member 30 is higher than a melting point of the fuse portion 13.

Each of the first connection portion 12 and the second connection portion 14 is a portion of the adapter 10. The first connection portion 12 refers to a portion of the adapter 10 close to the electrode terminal 60, and the welding point 20 is formed on the first connection portion 12. The second connection portion 14 refers to a portion of the adapter 10 close to the electrode assembly 70, and the second connection portion 14 can be connected to the electrode assembly 70.

The fuse portion 13 is also a portion of the adapter 10. The fuse portion 13 refers to a portion of the adapter 10 that connects the first connection portion 12 and the second connection portion 14. The fuse portion 13 may be parallel to a plane where the electrode terminal 60 is located, or may be located in another position. For example, when the adapter 10 is a straight line-shaped structure, the fuse portion 13 is parallel to the plane where the electrode terminal 60 is located. For another example, when the adapter 10 is an L-shaped structure, the fuse portion 13 may be parallel to the plane where the electrode terminal 60 is located, may be perpendicular to the plane where the electrode terminal 60 is located, or may be located in another position.

Since the adapter 10 is used to transmit electric energy between the electrode terminal 60 and the electrode assembly 70, the fuse portion 13 is provided on the adapter 10 to reduce damage to the electrode assembly 70, the electrode terminal 60, or another structure connected to the electrode terminal 60 caused by an excessively large current passing through. The fuse portion 13 has a small current flow area. When a current passing through the fuse portion 13 exceeds a preset current threshold for the fuse portion 13, a high temperature generated at the fuse portion 13 causes the fuse portion 13 to melt, thereby breaking the adapter 10. Accordingly, the electrode assembly 70 is electrically disconnected from the electrode terminal 60.

The current threshold that can pass through the fuse portion 13 is related to the current flow area of the fuse portion 13, a material of the fuse portion 13, and the like.

Moreover, a metal liquid may be generated when the fuse portion 13 melts and may drip into the shell 50, thereby imposing a negative impact on the safety performance of the battery cell 100. Therefore, the covering member 30 covers the fuse portion 13, so that the metal liquid generated when the fuse portion 13 melts does not easily drip into the shell 50, thereby reducing the negative impact of melting of the fuse portion 13 on the safety performance of the battery cell 100.

Since the covering member 30 has a function of reducing dripping of the metal liquid generated when the fuse portion 13 melts into the shell 50, the material of the covering member 30 is required to have a feature of high-temperature resistance, and the melting point of the covering member 30 is required to be higher than the melting point of the fuse portion 13.

The embodiments provide some specific structures of the adapter 10. The adapter 10 includes the fuse portion 13, so that the fuse portion 13 can melt when a current exceeds a preset value, to play a protective role. The covering member 30 covers the fuse portion 13, so that the occurrence of the liquid generated by melting of the fuse portion 13 dripping into the electrode assembly 70 can be reduced, thereby further improving the safety performance of the battery cell 100.

According to a second aspect, with reference to FIG. 2, some embodiments of the present application further provide a battery 200, including the battery cell 100 provided in some embodiments of the first aspect.

With reference to FIG. 2, the battery 200 includes a box body 80 and the battery cell 100, where the battery cell 100 is accommodated in the box body 80. The box body 80 is used to provide an accommodating space for the battery cell 100, and the box body 80 may be of various structures. For example, the box body 80 may be of a cylinder shape, a cuboid shape, or another shape.

In the battery 200, the battery cell 100 may be a square shell battery cell 100, or may be a cylindrical battery cell 100. There may be a plurality of battery cells 100, and the plurality of battery cells 100 may be connected in series, in parallel, or in series-parallel.

According to a third aspect, with reference to FIG. 1, some embodiments of the present application further provide a power consuming apparatus 300, including the battery cell 100 provided in some embodiments of the first aspect or the battery 200 provided in some embodiments of the second aspect.

The power consuming apparatus 300 may be, but is not limited to, a mobile phone, a tablet computer, a notebook computer, an electric toy, an electric tool, an electric motorcycle, an electric automobile, a ship, a spacecraft, or the like. The electric toy may include a stationary or mobile electric toy, such as a game machine, an electric car toy, an electric ship toy, and an electric airplane toy. The spacecraft may include an airplane, a rocket, a space shuttle, a spaceship, or the like.

Finally, it should be noted that the above embodiments are used only for describing the technical solutions of the present application, rather than for limiting the technical solutions of the present application. Although the present application has been described in detail with reference to the above embodiments, it should be understood by those of ordinary skill in the art that they can still make modifications to the technical solutions recited in the foregoing embodiments, or make equivalent replacements to part of or all the technical features therein. However, the modifications or replacements do not cause the nature of the corresponding technical solutions to depart from the scope of the technical solutions of the embodiments of the present application, and shall all fall within the scopes of the claims and the specification of the present application. In particular, the technical features mentioned in the embodiments can be combined in any manner provided that there is no structural conflict. The present application is not limited to the specific embodiments disclosed herein, but includes all technical solutions falling within the scope of the claims.

## Claims

1. A battery cell, comprising:
an adapter, wherein a welding point is formed on the adapter in a protruding manner; and
a covering member, connected to the adapter and covering the welding point, wherein an accommodating cavity used to accommodate the welding point is formed between the covering member and the adapter, and at least a portion of the welding point is accommodated in the accommodating cavity.

2. The battery cell according to claim 1, wherein the adapter is recessed and provided with a first recess, and a space formed by the first recess is at least a portion of the accommodating cavity; and
at least a portion of the welding point is accommodated in the first recess.

3. The battery cell according to claim 2, wherein a dimension of the first recess in a thickness direction of the adapter ranges from 0.05 mm to 1 mm.

4. The battery cell according to any one of claims 1 to 3, wherein the covering member is recessed and provided with a second recess toward a direction away from the adapter, and a space formed by the second recess is at least a portion of the accommodating cavity; and
at least a portion of the welding point is accommodated in the second recess.

5. The battery cell according to any one of claims 1 to 4, wherein in the thickness direction of the adapter, a height of the welding point is less than or equal to a height of the accommodating cavity.

6. The battery cell according to claim 5, wherein a dimension of the accommodating cavity in the thickness direction of the adapter ranges from 0.05 mm to 1 mm.

7. The battery cell according to any one of claims 1 to 6, wherein in the thickness direction of the adapter, a projection of the accommodating cavity on the adapter at least covers a projection of the welding point on the adapter.

8. The battery cell according to any one of claims 1 to 7, wherein the accommodating cavity is a sealed space, and the welding point is accommodated in the accommodating cavity.

9. The battery cell according to any one of claims 1 to 8, wherein the battery cell further comprises a shell and an electrode terminal connected to the shell, and the adapter is welded to the electrode terminal with the welding point formed on a side facing away from the electrode terminal; and the covering member covers at least the welding point.

10. The battery cell according to claim 9, wherein the covering member is also connected to the shell, and the covering member covers at least a portion of a surface of the shell that faces the covering member.

11. The battery cell according to claim 9 or 10, wherein the battery cell further comprises an electrode assembly accommodated in the shell; and
the electrode assembly and the electrode terminal are connected to the adapter in different directions respectively, or the electrode assembly and the electrode terminal are connected to opposite sides of the adapter in a same direction respectively.

12. The battery cell according to any one of claims 1 to 11, wherein the adapter comprises a first connection portion, a fuse portion, and a second connection portion that are sequentially connected, and the welding point is provided on the first connection portion; and
the covering member covers the fuse portion, and a melting point of the covering member is higher than a melting point of the fuse portion.

13. A battery, comprising the battery cell according to any one of claims 1 to 12.

14. A power consuming apparatus, comprising the battery cell according to any one of claims 1 to 12 or the battery according to claim 13.
